# EUROPEAN PATENT APPLICATION

(11) **EP 3 151 144 A1**
(43) Date of publication of application: **05.04.2017**
(21) Application number: 15735720.3
(22) Date of filing: 29.05.2015
(51) Int. Cl.: G06F 21/31, G06F 21/44, H04L 29/06

(54) **METHOD AND NETWORK ELEMENT FOR IMPROVED USER AUTHENTICATION IN COMMUNICATION NETWORKS**

(30) Priority: 29.05.2014 ES 201430822
(71) Applicant: Tecteco Security Systems, S.L., 28981 Parla (Madrid) (ES)
(72) Inventor: ENRIQUE SALPICO, Jose, Antonio, 28981 Parla (Madrid) (ES)
(74) Representative: Herrero & Asociados, S.L.
(86) International application number: PCT/ES2015/070421
(87) International publication number: WO 2015/181429

(57) **Abstract**

The present invention proposes a method and network element which allows improving, in different aspects, existing user authentication mechanisms in a communications network (for example, the 802.1x network), using a single network element. To that end, the element managing communications network access (for example, a router) will have a new physical and logical architecture (with various databases and verification and learning mechanisms) expanding the ability of said element, such that said element incorporates an authentication system to manage and provide the mechanisms needed for protecting communications, offering protection, management and automation abilities much greater than the systems existing today.

## Description

### Technical Field of the Invention

The present invention applies to the telecommunications sector and relates particularly to user access to a communications network by means of equipment (devices). More specifically, the invention described in the present specification relates to a communications network access method and element (node) incorporating improved mechanisms (particularly for security) in user authentication in a communication network.

### Background of the Invention

To assure security in communications networks, users (or subscribers) of said networks must be authenticated before allowing them network access (use of the network to communicate inside or outside the network). For this reason, various methods providing efficient and reliable authentication have been developed.

One of the most widely used standards for network access (and authentication) is 802.1x, which specifies network access control based on the access port and uses physical characteristics of IEE802 local network infrastructures to facilitate a form of authentication and authorization of devices connected to a port of the network in point-to-point mode and of preventing access to said port if the authentication and authorization process fails. This standard uses the Extensible Authentication Protocol (EAP).

In 802.1x (and in most known authentication mechanisms), there are three primary actors in authentication:
The authenticator: entity (it can be, for example, a network access point, a router or a switch) of one end of a communications network link facilitating authentication of the entity connected to the other end of the link.

The petitioner: entity (can be, for example, the user/device that wishes to access the network) that is being authenticated by an authenticator. The petitioner initiates and ends authentication exchanges and communicates his credentials to the authenticator when the authenticator requests them.

The authentication server: entity providing the authentication service by means of the authenticator. It can be located next to the authenticator or remotely. It can be of any type (for example Radius, LDAP, TACATS).

Communication begins with a non-authenticated user (petitioner) that is connected by means of an electronic device with an authenticator (which is usually the router). The router or point of access responds by requesting the identity. The client device responds with its identity and the router or point of access forwards this message to the authentication server. Authentication is performed according to the selected authentication algorithm (for example, cryptographic algorithm) and the result (positive/negative authentication) is sent by the authentication server to the router or point of access. Once authenticated the router or point of access authorizes the client device. During this process the router responds (although not in all cases), only allowing the passage of authentication packets (for example, EAP packets if that is the protocol being used), blocking any other type of traffic, until the identity of the user is verified (is authenticated) in the authentication server.

All the authentication mechanisms existing to date (and particularly standard 802.1x) have serious limitations and vulnerabilities, some of which will be explained below. These vulnerabilities/limitations are caused by weaknesses of the protocols and elements used for establishing trustworthy communications environments.

The mutual absence of authentication between the device/user to be authenticated (requestor) and the point of access or router (authenticator): the authentication of a pathway between the petitioner and the authenticator may expose the petitioner to a potential security attack, for example of the "Man in the Middle" type, which consists of an attacking device being located in the middle between the petitioner and the router, acting as the authenticator (access point or router) towards the petitioner and as the petitioner towards the authenticator. Furthermore, this is not just the router's fault since higher layers of the protocol also apply authentication in a pathway, which means that all architectures applying mechanisms of this type are insecure.

EAP satisfactory message (EAP -Success) weakness: a satisfactory message is sent from the authenticator to the petitioner when an accepted access (successful authentication) message is received from the authentication server. This message provokes a condition of a change to the authenticated state regardless of the prior state. The EAP satisfactory message changes the value of the EAP-Success box, which makes an immediate change to the authenticated state and with this network access will be allowed. However, this message is highly insecure since it does not contain information for the preservation of integrity. In other words, is an empty message (which only makes the value of the EAP_Success box change), so there is no verification of the petitioner, therefore being a simple pathway to fraudulently gain network access.

Identity theft: With IEEE 802.1X, authentication of the higher layers occurs after RSN (Robust Security Network) association, so there are two state machines, the RSN state machine and the 802.1X state machine. The combined action of these two machines creates an authentication state. Due to the absence of clean communication between these two machines, it is possible to perform identity theft, taking advantage of the lack of coupling. To that end, for example, once a legitimate petitioner is correctly authenticated with the router, a malicious (attacking) device sends a MAC 802.11 dissociation packet to the legitimate petitioning device, using the MAC address of the access point or router, successfully dissociating the legitimate petitioner. The transition of this message renders the RSN state machine dissociated, while the 802.1X state machine of the authenticator remains in the authenticated state. Since the 802.1X state machine in the authenticated state, the attacker has access using the MAC address of the authenticated legitimate petitioner since the state machine 802.1X of the authenticator remains in the authenticated state.

These and other security weaknesses existing in the standard 802.1X, make it clear that there are serious security problems in the authentication mechanisms used, and furthermore as they are designed (and specifically this standard), it is very complicated to apply a solution for said weaknesses.

Another one of the problems with current authentication mechanisms is that as has been seen for the standard 802.1x, in order for authentication to be performed, it is necessary to be able to have an authentication server to enable validating (authenticating) the users' network access. If there is no authentication server in the network, they could not be validated. Today all routers on the market do not have the ability to authenticate network users; to that end the installation of an authentication server is necessary, with the additional costs and increase in complexity and in the communication resources used that this entails.

Furthermore, most of these authentication elements/mechanisms have virtually not evolved at all in the last decade (at least not from the viewpoint of managing and improving security). There is therefore the need to provide an effective authentication and resource-saving solution completely covering the current needs of the user and of the network, not having the limitations and vulnerabilities of the authentication elements/mechanisms existing today.

### Brief Description of the Invention

The present invention provides the securing, personalization, universalization and, generally, improvement of existing authentication mechanisms (for example, 802.1 x) for authenticating users in a communications network (for example, a local area network), proposing an improved authentication mechanism (service). This improved mechanism proposed by the present invention is referred to as UNAS (Universal Network Authentication System) protocol.

The objective of the proposed authentication mechanism (protocol) is the management and securing of authentication mechanisms for authenticating all users when accessing a network. To that end, the element managing the access in the communications network (for example, a router) will have a new physical and logical architecture expanding the ability of said element, such that said element incorporates an authentication system and can offer all users unique and exclusive credentials.

To that end, in a first aspect the present invention proposes a method for the authentication of an user of an electronic device (the user uses the electronic device to have access to the communications network) in a communications network, where the method comprises the following steps performed in a network element:
a) receiving from the electronic device a network access request and an identifier of the device, an identifier of the user and a password for said user, in one or more layer 2 messages of the OSI model;
b) authenticating the user, performing at least the following verifications:
   b1) verifying that the identifier of the user is in an internal database of the network element as an identifier of a registered user (or authorized user, i.e., it is in the table of user and password control) and verifying that the received password corresponds to the one linked (assigned) to said user in the database;
   b2) verifying that the identifier of the device is in the database as linked to said user (to said identifier of the user);
c) if any of the verifications performed in any of the authentication steps is negative, considering the authentication negative and denying the network access requested by said user. If all the verifications of all the authentication steps are positive (the user verification, password verification, linking verification and, if applicable, time of access verification, security policy verification, verification of a web page allowed by the semantic analyzer...), considering the positive authentication (and allowing (not blocking) network access).

Denial of network access can be explicit (by means of a layer 2 message to the device notifying the denial) or implicit (without message notifying the denial). In both cases, it implies that the network element does not allow the requested network access (or does not perform the actions needed for providing network access) or, i.e., the packets sent by the device will be blocked in the router (and will not reach the network or will not exit the network if this is outgoing traffic from the network). And, obviously, if any of the verifications is negative, network access is denied and the remaining verifications and steps of the method are not performed. If the authentication is negative, the identification of the user can be stored in the internal database as an unauthorized user.

All the previously described communications between the device and the router (the network element) are performed by means of layer 2 messages of the OSI model; or, i.e., the described access control is performed in layer 2 (data link layer) of the OSI model.

In one embodiment, the user authentication step further comprises the following authentication steps after step b2) and before step c):
b3) obtaining the time (and optionally the date) when the access (the access request) is taking place and verifying that said time (and/or date) is within the allowed times of access stored in the internal database for said user and/or for said device (for example, if the access takes place outside the allowed times of access or allowed times of access for said user are not in the internal database, the verification would be negative); and/or
b4) verifying that the network access requested by the user is allowed by the security policies defined for said user stored in the database (if, for example, it is not within the security policies defined or there are no security policies defined for said user, the verification would be negative).

An NTP service can be used for obtaining the date and time for performing step b3) or for other functions (for example, knowing the current user's age from his date of birth).

A step of assigning a first access profile to the user can be performed after step b2) based at least on information stored in the database for said user. In that case, the security policies and/or the allowed times of access for said user can depend at least on the profile that has been assigned thereto.

The step of verifying that network access is allowed by the security policies in step b4) can comprise:
- verifying that the recipient and/or the web page and/or the service and/or the port which said user wishes to access (according to the access request that has been received) is allowed in the security policies defined for said user stored in the internal database.

The user's age can be calculated after step b2) based at least on information stored in the database (for example, from the user's date of birth and verifying the current date) and if the user is underage, allowed times of access specific for underage users are applied in step b3) and/or access to certain web pages is restricted according to the user's age. In one embodiment, if the user is underage the following actions are performed after step b2):
- classifying the user in a given category according to the user's age.
- verifying if the web page the user wishes to access, is classified as accessible for said category in which the user has been classified, where in order to classify a web page as accessible depending on the user's age an analysis of the semantic content of said web page is performed by a semantic analyzer located in the network element. At the external database level, there will be a content classification system or service module which is responsible for feeding, to the semantic analyzer, the content of the web pages it must analyze.

To register the user in the network (and so that the user is stored in the internal database as registered), the network element requests user information from the user and if the user does not provide said information, the network element denies registration in the network (and therefore, network access will be denied); where this user information includes at least one of the following parameters: full name of the user, mailing address, ID number, passport number, date of birth or other parameters identifying a the "real" person to whom said user belongs. Registration can be done during the first network access or prior to this first access. All the information about each user found in the internal database, is sent by the network element to an external worldwide database (for worldwide user management and control). This information can be sent through an external communications network (for example, the Internet).

The network element (which will usually belong to the communications network) can be a router, switch, firewall or splitter managing access in the communications network (incoming and outgoing).

Step a) can include: a1) receiving from the electronic device a layer 2 message including a network access request and an identifier of the device; a2) sending to the device a layer 2 message requesting an identifier of the user (101) and a password for said user and a3) receiving from the device a layer 2 message including an identifier of the user and the password for said user.

The identifier of the device can be the MAC address of the device, IMEI, IMSI, MSISDN or any other parameter identifying the device.

The method can further comprise:
- verifying if each communication in progress of the user is within the allowed times of access for said user and/or for said device stored in the database; if that is not the case for any communication, cutting off (interrupting) said communication.

In a second aspect, the present invention proposes a network element (a router, switch, or any other network element belonging to the communications network and managing access to the communications network) for authentication of a user of an electronic device in a communications network, where the network element comprises:
- a database comprising:
   - a table of identifiers of registered users (or authorized users) including the password linked to each user and a table of identifiers of users which are linked to each identifier of devices with authorized network access;
- means for receiving from the device a network access request, an identifier of the device, an identifier of the user and a password for said user (after the router has requested it from the device) by means of one or more layer 2 messages of the OSI model;
- a processor configured for authenticating the user, performing at least the following verifications:
   - verifying that the identifier of the user is in the table of registered users and that the received password corresponds to the one assigned to said user in said table;
   - verifying that the identifier of the device is in the corresponding table of the database as linked to said user;
   - if any of the verifications of the authentication is negative, denying said user's network access.

In the case of denial, the element can include means for sending a layer 2 message to the device. If the authentication is positive (all the verifications are positive), it will allow (will not block) access.

Finally, a fourth aspect of the invention relates to a computer program comprising computer executable instructions for implementing the described method, when being executed in a computer, a digital signal processor, an application-specific integrated circuit, a microprocessor, a microcontroller or any other form of programmable hardware. Said instructions can be stored in a digital data storage medium.

Additional, specific and preferred aspects, embodiments and details of the invention are stated in the attached independent and dependent claims. For a more complete understanding of the invention, its objects and advantages, reference can be made to the following specification and to the attached drawings.

### Description of the Drawings

To complement the description that is being made and for the purpose of aiding to better understand the features of the invention according to a preferred practical embodiment thereof, a set of drawings is attached as an integral part of said description in which the following has been depicted with an illustrative and non-limiting character:
Figure 1 shows a block diagram of the architecture of the authentication mechanism proposed according to one embodiment of the present invention.
Figure 2 schematically shows a possible example of a table of user and password control according to one embodiment of the present invention.
Figure 3 schematically shows a possible example of a table of device control according to one embodiment of the present invention.
Figure 4 schematically shows a possible example of a security policy table according to one embodiment of the present invention.

### Detailed Description of the Invention

The present invention proposes an improved protection (specifically authentication protection) mechanism or methodology (protocol) for protecting users in a communications network. The main element of this mechanism will be a network element (also referred to as a network node or device) managing access communications network access (incoming or outgoing). This network element can be a router, although in other embodiments it can be another type of network element such as a switch acting on layer 2 of the OSI model or another type of nodes managing network access in some way.

By means of this protection system, it is possible to precisely control different communications network users. To that end, it is necessary for the configuration of these security measures to be implemented in the elements providing network access, such as routers or switches. This element will be able to manage and provide the mechanisms needed for communications, user and device protection in the network. The implementation of an authentication system in the access network element (e.g. router or switch) at the layer 2 level of the OSI model, minimizes existing and future vulnerabilities and does not require any cooperation from end systems (i.e. in a transparent manner for said end systems). As will be seen, in addition to providing credentials to all network users, security policies are also applied in each device and user registered in the authentication service.

In order to access the network, the user will use an electronic device, which can be computers, tablets, PCs, mobile telephones, Smartphones, laptops and generally any equipment or electronic device that can be connected to a communications network.

The communications network (e.g., a data network) can be of any type both from the viewpoint of its structure (it can be a local area network, LAN, a wide area network, WAN, or any other type of network) and of the communication technology it uses (it can be wired network, a WIFI network, a mobile telephony network or it can use any other type of communications technology). It can also be a private or public network. It will usually work under the OSI model (Open System Interconnection) and TCP/IP stack.

The network element (router) will control access to a communications network (for example, a LAN), both incoming and outgoing. In other words, it will control access from a network (for example, the Internet) or equipment (device) external to the communications network, which attempts to access the communications network or from equipment which is in the communications network and attempts to communicate with another equipment of the network or with a network external to the communications network. In other words, it controls the use of the communications network for communication with devices or services within or outside the network.

This device that wishes to have access through the router would be the client device (which can communicate with the router directly or through another network or another network element such as a switch or a point of access), and the user that wishes to access using said device, and which must therefore be authenticated, would be the petitioner. This user can be a physical person or an object (in the field of "Internet of Things" or loT).

A resource model for the network element performing authentication (for example, a router) is defined and the functionalities of each of the components are identified. A trust hierarchy is established in two levels, level 1 being the highest level. Each security level is made up of mechanisms, protocols and dynamic or static tables; these tables work independently, but they are all synchronized with one another, thereby achieving a high coordination and security level. These levels are: level 1 (internal database) and level 2 external database (also referred to as externally accessible database). Security levels are synchronized with one another, but level 2 could not access the level 1 database (although level 1 does have access to level 2). This has been developed in this way because level 2 has data that is exposed to the outside (Internet), and to increase security, access to level 1 is denied. Calling it level 2, external database, means that this level has access to the outside and can be accessed from the outside, but it does not mean that the databases in this level are necessarily external to the network element (router), but rather that they are databases which can be found in the router.

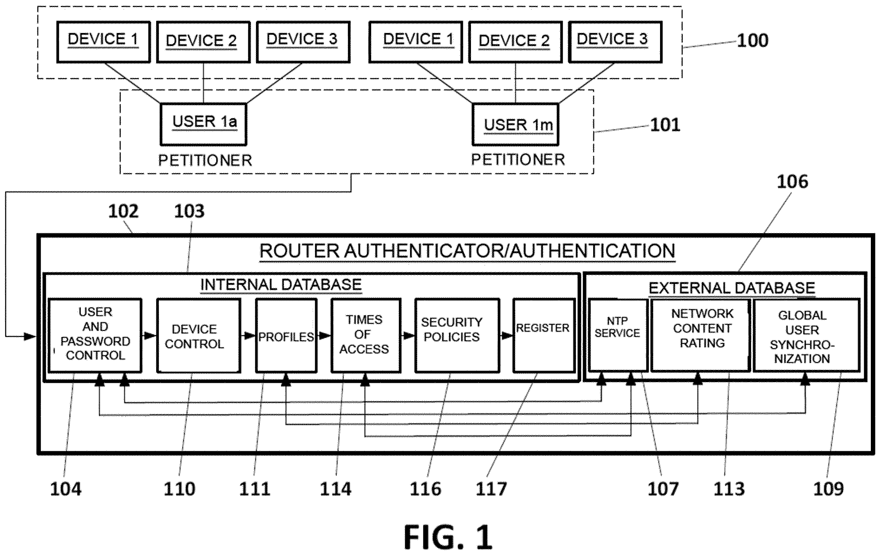

Figure 1 shows a block diagram of the architecture of the authentication mechanism proposed according to one embodiment of the present invention with the internal database (103) and the external database (106). In the example shown in this drawing, there are 2 possible users (101), 1a and 1m, that can access the network using 3 electronic devices (100), devices 1, 2 and 3, respectively, and to that end they communicate with a network element (102) managing network access (of course that is just an example and there can be any number of users and devices). This is the typical case of a family whose members (which would be the users) can access the network through any of the devices available in the home. Figure 1 also schematically shows interaction between different elements in an operation example.

### Level 1: Internal database

The elements that intervene in the internal database are described below. This level encompasses the control and authentication mechanisms that cause the resources and services of the network to have a better control, coordination and protection. To that end, a series of tables (or registers) that are stored in one (or more) internal database of the router is used, as can be seen in Figure 1.

The first table of the internal database (104) would be the table of user and password control (also referred to as table of user authorization). Information of all the users that are registered and their respective passwords in the router is stored in it. Specific data of the person creating said user, which allows identifying the real person behind that username (such as mailing address, telephone, ID number, passport, date of birth...) can be stored in this table. It also allows establishing predetermined groups, i.e., users can be put in groups. An important novelty is that, to the user created by network administrator, the nick or subusers of the different services on the Internet can be added and can be linked to the generated user (to specific personal data of said user such as mailing address, telephone, ID number, passport...), this method providing greater security both inside and outside the network since the nick associated with the user of the system can be traced, thereby finding out the real person behind that nick or username. The nick or username will not be able to be duplicated in any case in order to prevent identity thefts.

The first linking is done manually, i.e., when the users are created (for example, by the system administrator) third party services used by said users will be linked to them and in turn to the registered user devices that they use to access the network. Once the user generates traffic, this linking can be done and changed automatically by the system. To that end, the system performs mathematical calculations and a series of predictions based on the information that the user himself generates such that different services, devices with which he communicates... can be linked to one user. This linking can also be predefined in the tables or be changed at any time by the network administrator.

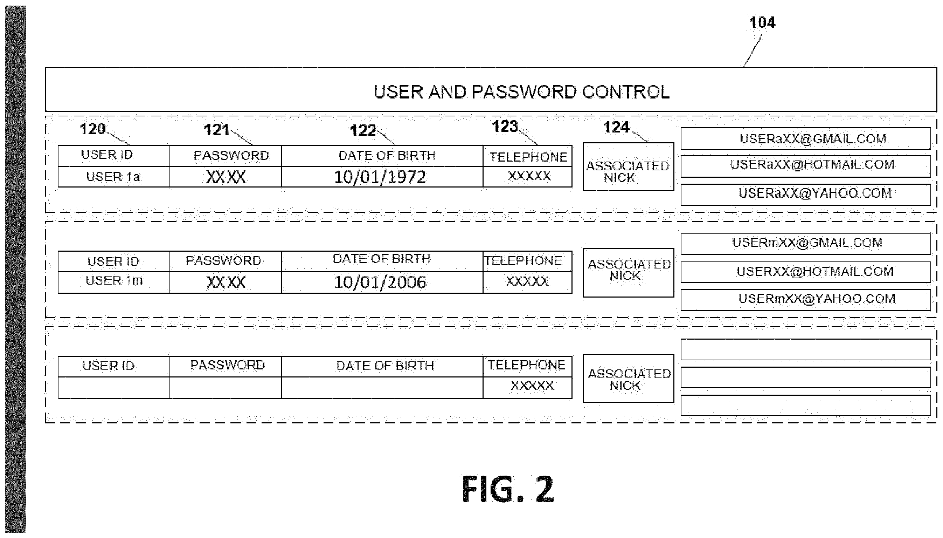

Figure 2 shows an example of the table of user and password control (104) of the internal database. Obviously, the fields appearing in said table are just an example and other type of fields can be used.

The fields of this table are filled in when the user is registered in the network (for the first time) or when for any reason some of these data are to be changed, for example. The identifier of the users having authorized access to the communications network is added in the field user ID (120) (identifier of user). A password (121) (which can be chosen by the user himself or chosen by the network administrator and later changed by the user) will be added for each user. The password usually has a limited validity period (for example, 90 days) and after that time the user has to change the password, if for any reason the user does not change the password it would be indicated in this table that the password is too old and the user may not have access to the network. Once the password has been registered, in one embodiment the next step is to complete the field of date (or year) of birth (122). This field "date of birth" is an innovation in and of itself since this field identifies the user's age and depending on this age the system will automatically add the user to the corresponding profile, i.e., if the user is of legal age (Figure 2, user1a), he will be assigned one of the profiles for adults (for example, standard profile or administrator profile), but if on the contrary the user is underage (Figure 2, user1m), he can be automatically assigned a parental control profile based on the user's age. In order to do so, the table can directly communicate with a service such as the network time protocol (NTP) through external database, for example, and thus perform verification of the user's age with the current date. Furthermore, personal data such as mailing address, telephone (223), ID number, passport number and any other datum characterizing the real or "physical" user can be requested from the user and stored in the table. Mail accounts (124), nicks (123) (pseudonyms) used in social networks, videogame accounts (XBOX live and PlayStation) or other services used by the user can also be linked.

When the user wishes to access the network, the router receives a network access request message from the device the user is using. When the router receives this message, the router requests the password and the identifier of the user if it did not receive it in the first message from the device (and the device from the user, by means of a user interface). The router will verify if the user is in this table, if the password entered by the user coincides with the one the router has in the table of user and password control and it will verify if the user is linked to this device (according to the table of device control). If the user is not in the table (he is not authorized/registered), the password is incorrect or if access is being performed through a device to which the user is not linked according to the corresponding table (as will be described below), access will be denied to the user. Furthermore, the router can send a message to the table of denied users for storing the identification of the user who has been denied access.

All the previously described communications between the device and the router are performed by means of layer 2 messages (also referred to as data link layer or level) of the OSI (Open Systems Interconnection) model.

There will also be a table of device control (110); in this table, devices having authorized network access (by means of their MAC address, IMEI, IMSI, MSISDN or any parameter which identifies said device) are registered and users who can access the network with each of the authorized devices are added. In other words, this is the table where the linking or assigning of registered users with devices takes place. Seen otherwise, for each registered user the devices with which he can access the network appear in this table. If the device is not in this table, it will not be able to be linked to any user so that it will not have access to the network.

Innovation in terms of linking the users with the devices must also be pointed out; all the users registered in the network must be linked to at least one of the authorized devices, since otherwise they will not be able to access the network. Likewise, if the user attempts to access the network with a device other than the one that is linked in this table, access to the network will be denied for said user. The methodology used is that the users are linked to the identifier of the device (MAC address, IMEI, IMSI, MSISDN or any existing identification in said device), i.e., this link is applied in layer 2 of the OSI system. When using the link between the device and the user on layer 2 of the OSI system, use of an external application in the devices is not required. With this innovation the risks of vulnerabilities in the system and identity theft both of the identifiers of the devices and of the users are minimized.

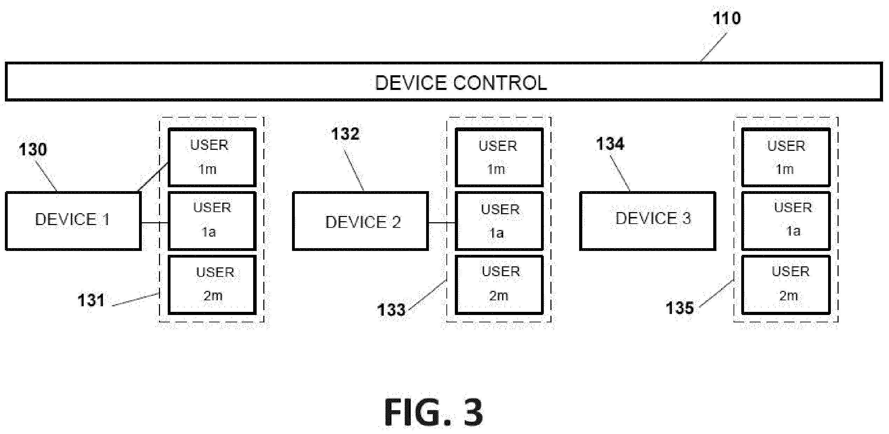

Figure 3 shows an example of the table of device control (110) of the internal database. In this case, the users linked to device 1 (130) (which will be identified by its unique identification, such as MAC, IMEI... in the table) are user 1 m and user 1 a (131). These users can continue with the process, if they access with the device 1; in contrast, user 2m will not be able to access the network because he is not linked to any device. In device 2 (132) the only linked user is the user 1 a, (133), i.e., user 1 m, 2m and any other user will not be able to access the network from device 2. Device 3 (134) is not linked to any user (135), so it will not be possible to access the network from this device (even though it is registered in the table). This double verification (device and user/password) greatly increases the network access security.

Within the database, there can also be a table of profiles (111), where the profiles are assigned or defined for different users of the network. In other words, the profiles assigned to each user (to the authorized users that are in the table of device control) will appear in this table.

In one embodiment, underage users (detected based on the user data, such as date of birth, of the table of user/password control) are automatically assigned the parental control profile. This parental control profile can be linked to an age-associated Internet content (web pages, social networks...) rating system, which uses a semantic analyzer. One of the novelties of the present invention is using this system for granting Internet access. Using the age-associated external network (Internet) content rating system allows access to the Internet to have an age-associated rating system at the user level. Several categories can be included in the rating system according to the user's age (for example, over 7, over 12 or over 16 years old, although more categories can be added and configured). A plurality of descriptions of different contents (obscene language, discriminating language, drugs, sex, gambling, horror, violence, social networks...) which the system (the semantic analyzer) takes into account to rate the content of the web page, social network..., can also be defined. All these fields are completely configurable by the system administrator. Therefore when the semantic analyzer finds that language of some of these types is used in the web page the user wishes to connect to, it prevents accessing the network (depending on the age category to which the user belongs). For this content rating to meet the different cultural standards in the network of different European countries, a scale similar to the one used in the PEGI system, started and managed by the European Federation of Interactive Software for software and videogames (not for web page and social network content) can be used for rating Internet contents.

The user can be assigned in this table to any of the profiles that are predefined in the database. For example, a standard profile that would be the by-default profile (these users would have no authority to change the configuration of authentication; they are administrated by the authentication system) or an administrator profile for the system administrators (users having more privileges, having the authority to configure and change the configuration of the authentication system). If a user is underage, he can be assigned a parental control profile. In this profile he is granted access according to the category to which he belongs, which will depend on the user's specific age (for example, over 7, over 12 or over 16 years old). This linking to the parental control profile and to the category according to user's age is automatically performed by the router, since it knows the user's age from the entry for said user in the table of user/password control. The router can detect when the user becomes of legal age and he will be automatically eliminated from the parental control profile and be assigned the standard profile, for example. In these cases, control measures such as, for example, informing the network administrator (by means of SMS, e-mail or the like) of these situations, so that it is aware of them, can exist.

As described, a semantic analyzer, which is responsible for analyzing the web pages that users with parental control (profile) wish to visit, will also exist in the router, for analyzing the web content and blocking access to the web depending on the content thereof. To that end, before showing the content of the web page, the semantic analyzer analyzes the page content and stores said information in the memory. If it is a web page that has already been visited, information concerning its content is already stored in the router and, if said stored information is not very old, the router can use it for denying access or not, without having to analyze it again. If it is very old, it can analyze once again the web page content just in case it has changed. The semantic analyzer has direct communication with the external database level (which will in turn access said web pages) for performing said online verifications of the web page contents that the user wishes to visit in order to restrict access or not. The semantic analyzer does not complete deny access, what it does is to prevent access to the web pages with illicit content.

An entry or table of time of access (114) (also referred to as table of time policies) can also exist in the internal database. The network access time limits (i.e., the days and times when it can access the network) will be defined in this table for each user and/or device. These access limits are predefined by the system and can be manually configured, for example.

All the users (directly or through their profile) and devices (probably except for the administrators who have no time restrictions) must be defined in this table since, if they are not defined, they will not be able to access the network. This time access at the router level is an innovation since currently the routers on the market do not make this restriction.

In order to be able to apply said time limits, the router must know the current day and current time and other data, such as, for example, the non-business days that must be applied (since the time access can be linked to the fact that it is a non-business day or a business day). To that end, the router will have to use an NTP service (the logic of this service will be at the level of the external database), for example. In order to know the non-business days to be applied, the NTP service must know the zip code and applies the appropriated business calendar depending on said code. This configuration can be performed in the first configuration of the router, when the zip code is requested from the device in order to correctly register the date, for example. This date can only be configured in the router and no user other than the administrator can access same; the date and time can be periodically refreshed by accessing the NTP service.

The fact that this table of time of access is connected to the NTP service housed in the router itself (at the external database level) is an innovation since this is currently not implemented in any router and it allows a more intuitive, reliable and simple management when managing the network. This adds intelligence to the router, since based on a series of data it can decide and know the current date of the week and it can decide the time limit for one or more specific users and, based on those limits, decide whether to allow network access or not.

In a possible embodiment, there would be an entry for each device and for each user linked to each device in this table, indicating, for each day, the time range(s) in which the network can be accessed (defining a start time and an end time for each range, for example). Continuing with the example shown in Figure 3, device 1 would have an entry in this table and, in turn, there will be another entry in the table for each user linked to this device (1 a and 1 m). The registered devices are also assigned a time limit independent from the user. Thus, for example, device 1 may have no time limitation (so the range of access listed for this device would be for every day from 0:00 to 24:00), whereas the users do have a time limitation, for example, user 1 a can access the network from 08:00 to 22:00 on business days, whereas on the weekends he can access the network from 12:00 in the morning to 22:00 and user 1m from 19:00 to 21:00 on business days and until 22:00 on the weekends (user 1 m has a more restrictive access policy because the system knows that he is underage).

In one embodiment, if the device or user is not in this table, it supposedly does not have time of access restriction. In an alternative embodiment, if the device or user is not in this table, it supposedly is not authorized to access the network and will be denied access.

In one embodiment, if during the communication established by the user, the allowed time of access is exceeded (i.e., when the communication started he was within the allowed time of access, but at a certain time said time is exceeded), the router can cut off communication and deny access. To that end, the router can periodically verify the table of times of access for the communications in progress.

Another table (or entry) that could exist in the internal database would be the table of security policy (116). This table will define a series of rules establishing the security policies, such as for example, which addressees and/or which services and/or which ports and/or which web pages each user or each device can access. In the existing solutions, the access security policies are applied in the layer 3 of the OSI system and the network elements applying said security are the firewalls. In the present invention, the security policies are applied in the layer 2 of the OSI system (in the router or switch), i.e., said policies can be applied before obtaining an IP address. In addition to applying these policies in the layer 2 of the OSI system, the policies are also applied at the user level, i.e., independent from the IP address, the system applies said security policies to the users registered in the system. These policies would be applied both at the origin and at the destination, i.e., both at the entrance of the network (inbound) and at the exit (outbound), so they affect both to the communications network managed by the router (internal network) and to the external network/Internet. Another innovation of this system is that policies are also applied to logic ports (TCP/UDP), there is currently no equipment which applies these policies to users and devices without needing IP addressing.

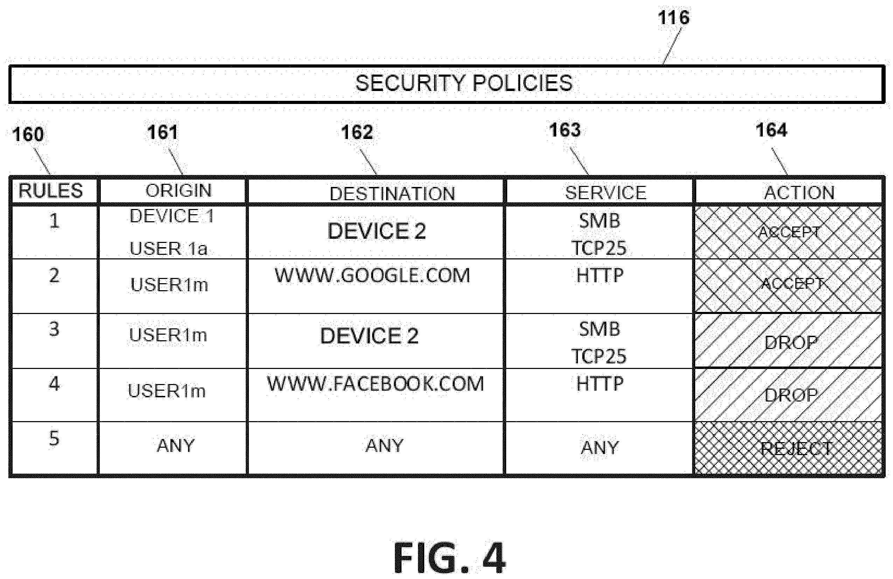

Figure 4 shows an example of the table of security policies (116) of the internal database. As can be seen, rule 1 (160) states that if user 1a (161) linked to device 1 wishes to access device 2 (162) at the SMB and TCP 25 logic ports (163), this communication is allowed (accepted) by the router (164), but it is only allowed at these logic ports, meaning that if device 1 (461) wishes to access device 2 (462) through other ports different from the previous ones, these communications cannot be established since there is no rule in the system allowing it. In rule number 2 a Google access policy is defined which is allowed for user 1 m (161), this means that the (underage) user 1 m can access Google, but if this user wishes to access a web page with illicit content, he will not be able to access same through Google (the semantic analyzer would block the access since the user has an underage profile). In other words, concerning the policies of underage users, denying or allowing access to a web address can be predetermined by means of these rules of security policies, but even when access is allowed by the security policies, if inside said web the user wishes to access data which is configured in the age-associated content rating system (in the semantic analyzer) as non-allowed data (for example, related to sex or violence), the semantic analyzer of the router will detect it, the router will block this user's access to that page, the web will automatically be labeled as "forbidden" and it will be included in the semantic analyzer as a forbidden web page.

Rule number 5 indicates that those communications that are not explicitly comprised in the security policy database would be automatically rejected, so that the router automatically drops the traffic and denies access. As can be seen, there are two types of reject actions in the table "drop" and "reject", the difference is that DROP receives the packet and discards it (without responding to the emitter) and REJECT receives the packet and processes it and builds a reject packet and sends it back to the emitter. In another example in which the required security is lower, those communications not explicitly comprised in the security policy database can be said to be allowed by default.

Finally, there could be a table (117) (referred to as table of activity register or "log", for example) in the internal database, where all the activity of all the users and devices of the system (communications that have been established, addressees, date and time...) is stored. In one embodiment, all the access attempts are recorded whether they have been successfully authenticated or not.

### Level 2: External databases

In order to be able to provide high-level protection to the network element proposed in the present invention (e.g. router), there is a series of mechanisms the primary objective of which is to support the mechanisms belonging to the internal database for obtaining additional information about external networks or indexing or correlating any type of data.

In order to carry out these support mechanisms, a series of tables (or registers) are used which are stored in a database (or several databases) of the router having access to external networks/Internet (hence it is called an external database).

These mechanisms can comprise an NTP service (107), a content rating service (113) and a global user synchronization service (109).

As previously indicated, by calling it an external database (or externally accessible database), it means that this level has access to the outside (to external networks) and can be accessed from outside the router, but it does not mean that the databases that are on this level are external to the network element (router), but rather they are databases that can be found in the router.

### - NTP service:

The NTP (Network Time Protocol) service or protocol is a protocol that is used for obtaining and assuring the current exact time (and date). An external server (NTP server), for example, can be consulted to that end using said protocol. In one embodiment, the router can have a trustworthy measurement of the exact time and it would not be necessary to consult an external server. NTP is used for the time and the date of the clock in all the devices of a network and it uses universal coordinated time (UCT) in the port 123 to establish communication between the client device and the server. The NTP protocol can synchronize the date and the clock of distributed devices to a thousandth of a second or a fraction of a second. In one embodiment, the NTP service is oriented towards providing the network element (router) with the exact date and time, which allows the automation of different mechanisms of the proposed authentication mechanism (assigning parental control profiles, knowing if network access occurs within the authorized schedule...), thereby maximizing network security and improving the management thereof.

Thus, for example, the NTP service allows:
- Synchronizing the date and time of all the devices and users.
- Determining ages of the users at all times; with this methodology it is possible to know the age of a user and, based on this age, to apply one filter or another (PARENTAL CONTROL). The router does it automatically and does not require actuation of the administrator system.
- Identifying the calendar applicable to the city of the user and thus being able to offer time limits individual for each profile and user, i.e. if the user of the network to which said user is connected is associated with, for example, the zip code of a specific city, the server will have the local business calendar and the non-business calendar, whereby time policies based on the local calendar will be applied.

In one embodiment, the router can have the NTP service configured in the address http://www.pool.ntp/tecteco.org. When the router needs to know the date and/or time, it sends a date and time request to this address, this request reaches the NTP server and, based on the city where the router is located, a date profile is assigned to it. This NTP server in turn can have constant communication with a global NTP server (for example, at http://www.pool.ntp.org/) in order to acquire the time configuration parameters.

Although the NTP service is the most common, the proposed access system proposed can of course use other services for obtaining the date and time data it needs for applying different security mechanisms.

### - Network content rating service:

As indicated there is an age-associated external network (Internet) content rating system using a semantic analyzer, which downloads the web pages that parental control users wish to visit, in order to analyze the content of the web and block access to the web depending on the content thereof.

In this external database level, there is a module of the content rating system or service that is responsible for feeding to the semantic analyzer with the content of the web pages it must analyze. This "downloading" of web pages for the semantic analyzer can be periodic. Once the content of the web pages has been analyzed, the semantic analyzer will update its own database, indicating whether or not access to said web pages is allowed for users with a given profile and category (for example, parental control under the age of 12).

### - Global user synchronization service (also referred to as single user synchronization service):

This new service or system that can be incorporated in the present invention attempts to solve the problem that currently exists when pursuing and identifying a user in the network, for example, when the user commits a crime. To that end, this system is split into two fundamental components, one of them being really identifying all users (and devices, nicks, email accounts, service accounts of these users...) that are on the Internet (in other words, identifying the physical person behind each user) and the other one being feeding this information to a worldwide database for management and control of said users.

The operation consists in that all the users registered in the new authentication system feed information identifying the physical person behind the user to the input of the external database level to the router (and this information being sent to a worldwide database). To that end, user information is saved and registered in a table of the router (for example, in the table of user/password control) such as, for example: name and last names, ID number or some other identification, telephone number, date of birth, services in the network, such as, for example XBOX LIVE, PSN PLUS, Facebook, etc., emails, external connections, linking of devices, etc... This information is requested from the user, for example, when the user is registered in the network (which can be when the user attempts to access the router for the first time or prior to that). In one embodiment, if the user does not provide this information, he can be denied registration as a user (i.e., he is not registered as an authorized user), and therefore cannot access the network. This information about users is sent so that it is registered in a table housed in the external database level external to the router, for example, in a table SYN_USERID_WORLD which preferably has a format making it exportable and understandable by devices on a global level. This information which is housed in the external database can thus be sent and synchronized with a worldwide database. For correct operation and in order not to corrupt the data extracted from the database that contains said information, it may be necessary to install a second slave database within the infrastructure of the different Internet service operators (which will be communicated with other institutional/governmental organizations). The main server or servers of this worldwide database will therefore be housed in the different data centers of governmental buildings and will have access to data identifying physical people behind all users of all networks.

Once the different elements existing in the network element (e.g., router) for authentication and the operation thereof have been described, an example of a mode of operation will be described below according to one embodiment of the invention, to aid in clarifying the complete authentication process and the interaction between the different elements. To that end, Figure 1 schematically showing (by means of arrows) the interaction between the different elements in an example of operation of one embodiment will be used.

As previously stressed, in order to access the network, all users that are registered in the system have to be linked to a device, since users alone (without being linked to any device) would not be able to access the network. So in the example of Figure 1, the petitioners (users who will be authenticated), in this case user 1a and user 1m (101), must be linked to one or several devices (100).

When the user wishes to access the network, it sends a network access request message (layer 2 of the OSI model) from the device, the user is using, to the router. The device can be connected to a communications network external to the communications network to which the router belongs and in that case, the access request will come through that external network. If the device is connected to the network to which the router belongs, in that case, the access request will come through that network. When the router receives this message, it will send a message to the device with which the user is attempting to access (through the communications network itself or through the external network if the device is connected through an external network), requesting the identification of the user attempting to access and his password. Once the petitioner sends the information requested by the system, the system will verify the information obtained with the corresponding register (104), and if the user (petitioner) (101) is not registered in the database (104) or the password he provided is not correct, the process will not continue.

It is being assumed that the user had already been previously registered in the router, or in other words, the user data (date of birth, password...) are already registered in the table of user and password control (104). When the user is registered for the first time, every time there is a change in user data (in the table of user and password control), and optionally every time the user wishes to access the network, petitioner information will be sent to the external database (106) and the latter in turn will add said user information to the table of global user synchronization (SyN_USERID-WORLD, 109).

The authentication process proceeds to the next step; in this entry, the system verifies the link of the user with the devices in the table of device control (110). In this table, the router verifies the link of the user with the registered devices, i.e., it verifies that the device (100) being used is registered in said table and linked to said user requesting the access. If the user is not linked to the device with which he requested access, the authentication process will not continue and said user will not be able to access the network. If the user is linked to the device, the authentication process will continue.

Likewise, as a protective measure, a user must be linked to any registered device of the network, if the user which is correctly created (i.e., the password entered coincides with the password saved in the router for that user) has not been linked to any device, said user will not have network access.

Once it has been verified that the user is linked to the device with which he accesses the network, the authentication process continues and the data in the entry (table) of user profiles (111) will be verified. A network access profile will be assigned to the user in this entry. These profiles will be predefined in the router and can be, for example, the administrator, standard, parental control or any other type of predefined profile. If the user is considered underage, the router automatically adds said user to the parental control profile (age-associated rating profile). In other words, based on the user's age, an adult profile (for example, administrator or standard) or a parental control profile will be added.

In this case, it is assumed that the petitioner, user 1 a, is of legal age (and by default is integrated in the standard profile) and that petitioner, user 1 m, is underage, so the router automatically adds this user to the parental control profile; within this profile there are a series of predefined categories (for example 3), and depending on the user's age the system will assign him to one category or another. The parental control profile is synchronized with the content rating entry (113), within the external database (106), in order to establish correct parameters (a correct web page rating) within each category.

Once the preceding step is completed, the authentication process per se has been completed; but, as described, the proposed authentication process goes beyond this and controls other parts of the network access process.

The next step would be the control of the time of network access. To that end, the table of access times (also called of time policies) (114) is used. If the time/date at which access is being attempted is not within the times authorized for the user and/or device in this table (or optionally, if the user is not defined or registered in this table), the process will not continue and the user will not have network access. If the user is defined in the table, the time of access configured in said table will be applied and the access process will continue. In one embodiment, if the user is underage, time policies will be assigned to him according to the age of each underage user. These time policies can be predefined by the system, defined by the system administrator or predefined by the user's age. Once the control process relating to the time of access has concluded, the users will have network access for the time stipulated in the corresponding entry of time of access (if they attempt to access outside the times stipulated in this table, the router will deny their access). The control of the time of access is communicated (synchronized) with the entry of NTP service (107) within the external database (106) to enable determining the access schedules to be applied and the city to which the user belongs (to control, for example, business and non-business days).

The next step is to manage access to the services using the security policies defined in the table of security policies described above (116). Accesses to the internal or external network which are allowed for each user are herein defined. These rules are similar to those which would exist in a firewall of the network, i.e., a given communication can be established depending on the origin, destination, service and/or logic port. In one embodiment, the users, devices, groups of users and profiles must appear in these security rules in order to be able to access the network. Both outgoing and incoming communication traffic that is not defined in these rules or policies will be denied.

This concludes the authentication process. Once concluded, all the user and device activities (successful, unsuccessful, and not granted authentications) can be registered and stored in a table of activity register (LOG).

If any of the verifications performed in the authentication is negative (because the user is not registered, the password is not correct, the linked device is not the correct device, the time or security policies are not complied with...), in addition to not allowing access for said user, said user can be included in an internal table in the router, where those users that have been denied access as the result of a negative authentication would be stored. In one embodiment, the first thing that would be verified when a user wishes to access the network is if said user is in this table of denied users and if he is, authentication would not continue, denying him network access. The network administrator could, if he considers it appropriate, eliminate a user from this table to give him the chance to be authenticated when he again attempts access and, consequently, access is not automatically denied.

The case described above is only an example, and it is possible that not all verifications exist in a specific embodiment (for example, there may not be a table of times of access and/or of a security policy).

In order to save resources and time, the complete authentication process described above can be carried out only the first time the device and user access the network and every time the device and user establish a new communication with the network. In other words, if the device and user are using a pre-established communication, they will be authenticated, so it will not be necessary to perform the complete process again, but rather only part of it. Therefore, in one embodiment, once the user is correctly authenticated and using a pre-established communication, only the time, security and parental control (where appropriate) policies are verified every time he accesses the network to assure that he is accessing the network within the authorized time frame and that he accesses authorized web pages, addressees or services (including those relating to parental control).

In summary, it can be said that the proposed authentication mechanism offers protection, management, universalization and automation abilities much greater than the systems existing today. It can be said that with this new generation of routers, the administration and management is much simpler than the one existing today since the network or system administrator (in the event of a possible problem or a modification of the configuration parameters) will not necessarily have to interact with the new generation router, but rather based on the mechanisms included in said router, the router itself will automatically search for and apply the best solution for said problems, optionally informing the administrator about the problem and the provided solution. Standards, protocols and network elements, such as routers, switches or firewalls, that have not seen any progress for more than a decade, have evolved with this new generation of routers.

It can be said that the proposed mechanism is partially based on standard 802.1X, improving it, since the proposed authentication mechanism offers the certain advantages against vulnerabilities of 802.1X-based authentication systems and/or standards existing today, such as, for example:
- The implementation of a complete authentication system in a router (whether a home or a business router). This implementation minimizes existing and future vulnerabilities since no traffic whatsoever is generated with any other network element.
- Disappearance of "relative anonymity" in the network, linking users to actual information thereof (end client information such as name and last names, mail, telephone, GPS coordinates, third party services, ID number...). All the user-related information could be transferred to the organizations regulating the network without this entailing a breach of privacy but rather an additional element for secured communications. Today there is public user data provided by the service providers but it does not reach the level of detail required by Internet services for the security of their clients. This directly affects the client/server reliability which is the pillar that upholds security in communications within a network.
- The possibility of using a single and global (world) user. This user will be linked with all the services existing in the network, the nick of social networks, mail accounts, the cloud, big data... and in turn with all the devices of the user, whether they are mobile devices belonging to a company, the family, government agency, etc... Being able to have a single world user identification linked to all the services and devices of the network, entails maximizing the possibilities of identifying and capturing any type of delinquent using the network to commit his actions, since all users could be traced with an accuracy that currently does not exist, minimizing the costs and time for these traces. Furthermore, the management of these users by means of companies or government centers would save time and money for companies since the management of these users would be minimal.
- Another quite significant innovation is being able to automatically identify underage users and apply to them special times of access and access policies based on the age-associated content rating system. This age-associated rating system is currently applied to software products such as video games, movies..., but it has never been applied to network accesses (web pages, social networks). It must be pointed out that this innovation and this identification of underage users are done by the system automatically since, to that end, it uses the NTP v6 time protocol.
- The use of an individualized semantic analyzer (one per user or group of users) to make the age-associated rating system more robust. It makes possible for the analyzer to automatically audit web pages or social networks to which underage users are connected and to grant or deny/block access based on the configuration of each user.
- As previously described, the system uses the NTP v6 date and time protocol. This protocol and the algorithm of the system make it possible to know the city of the user or group of users and devices. With this improvement of the actual NTP protocol, the system knows exactly which city the user is in and can therefore apply time of access policies based on the identification of the user's zip code and apply local and national business calendars.
- The implementation of a firewall that is applied throughout the different layers, from layer 2 to layer 7, of the OSI system (i.e., a multilayer firewall, although as described, it starts at the layer 2 level with MAC addresses) does not exist today either. In addition to applying this security in these layers, the rules of user-level firewalls are applied, which assures that regardless of the device or the IP address of the device, these policies are applied on a user level. That is a qualitative step since network security is currently applied in layer 3 of the OSI system.
- The cost savings entailed with this innovation should also be pointed out, since with this system embedded in a single network element (router), it would not be necessary to install any authentication server or firewall.
- Content control: Application of security policies and content filters based on the user profile completely integrated in the authentication system, granting it intelligence since the authentication system is completely automatic and learns based on the threats detected in the course of user communications in addition to establishing policies at the user level based on said learning.
- Improvements in the layers of the OSI model, improving the standards and protocol of each of the layers. The most significant improvements are in layer or level 2 of the OSI model in which there are incorporated new security elements which will transform the protocols acting thereon, adding protection to the end user as well as to the network infrastructure itself.
- New links between the layers of the OSI model, enabling a single communications control point in the access to a trusted or untrusted network. Communications control is assured by combining network identifiers of the protocols of the different OSI levels, respecting the hierarchy of the current reference model. In other words, by means of the proposed solution, identifier elements identifying level 2 of the OSI are associated with end user information relating to other levels of the OSI model such as IP, TCP/UDP ports,...as well as protocols of the last layer (application) such as the mail user. This does not mean that the information travels within the data packet but rather the relation of each identifier element is used for providing protection to the user. The fact of establishing a link between the MAC and the e-mail user to allow or deny communications going through the device with the new implemented solution, will serve as an example.

It must be indicated that not all the elements included in the router which have been described in this document are essential for the operation of the authentication solution proposed by the present invention; many of them are optional and they may or may not be included depending on the particular application and on the desired performances.

Although many of the presented embodiments refer to routers, the present invention is not limited to application thereof in routers but also in other network elements, such as for example, switches, firewalls, splitters and generally in any element considered as performing the network access management functions, either completely or partially. Take, for example, the case in which the gateway of the network is a firewall, so-called because it incorporates security abilities, to which it is possible to apply the detailed security mechanisms when performing the segmentation functions (switch) or demarcating the networks (router),...among other functions.

Note that in this text, relational terms such as first and second, greater and lower and the like, can only be used to distinguish one entity or one action from another, without actually necessarily requiring or implying that relation or order between said entities or actions. Furthermore, the term "comprises" and the derivations thereof (such as "comprising", etc.) must not be understood in an exclusive sense, i.e., these terms must not be interpreted as excluding the possibility that what is described and defined may include additional elements, steps, etc.

Some preferred embodiments of the invention are described in the dependent claims included below.

Having sufficiently described the nature of the invention as well as the manner of carrying it out in practice, the possibility that the different parts thereof could be manufactured from a variety of materials, in a variety of sizes and shapes must be highlighted, those variations recommended by the practice also being able to be introduced in its constitution or method provided that they do not alter the fundamental principle of the present invention. The description and drawings only illustrate the principles of the invention. Therefore, it must be noted that the persons skilled in the art could conceive several arrangements which, although have not been explicitly described or shown in this document, represent the principles of the invention and are included within its scope. Furthermore, all the examples described must be considered as non-limiting with respect to such specifically described examples and conditions. Furthermore, all that is described in this document relating to the principles, aspects and embodiments of the invention, as well as the specific examples thereof, cover the equivalences thereof.

## Claims

1. Method for the authentication of a user (101) of an electronic device (100) in a communications network, where the method comprises the following steps performed in a network element (102):
a) receiving from the electronic device (100) a network access request and an identifier of the device (100), an identifier of the user (101) and a password for said user (101), in one or more OSI model layer 2 messages;
b) authenticating the user (101), performing at least the following verifications:
b1) verifying (104) that the identifier of the user (101) is in an internal database (103) of the network element (102) as an identifier of a registered user and verifying that the password received corresponds to the one linked to said user (101) in the database (103);
b2) verifying (110) that the identifier of the device (100) is in the database (103) as linked to said user (101);
c) if any of the verifications performed in any of the authentication steps is negative, considering the authentication negative and denying the network access requested by said user (101).

2. Method according to claim 1, where the user authentication step further comprises the following authentication steps after step b2) and before step c):
b3) obtaining the date and/or time when the access is taking place and verifying that said date and/or time is within the allowed times of access (110) stored in the internal database (103) for said user (101) and/or for said device (100);
b4) verifying that the network access requested by the user is allowed by the security policies (116) defined for said user (101) stored in the database (103).

3. Method according to claim 2, where a step of assigning a first access profile to the user (101) is performed after step b2) based at least on information stored in the database for said user (101), and where the security policies (116) and/or the allowed times of access (110) for said user (101) will depend at least on the profile that has been assigned thereto.

4. Method according to any of the preceding claims 2-3, where the step of verifying that network access is allowed by the security policies (116) in step b4) comprises:
- verifying that the addressee and/or the web page and/or the service and/or the port which said user (101) wishes to access is allowed in the security policies (116) defined for said user (101) stored in the internal database (103).

5. Method according to any of claims 2-4, where the user's age is calculated after step b2) based at least on information stored in the database (103) and if the user is underage, allowed times of access specific for underage users are applied in step b3) and/or access to certain web pages is restricted according to the user's age.

6. Method according to claim 5, where if the user is underage the following actions are performed after step b2):
- classifying the user in a given category according to the user's age.
- verifying if the web page the user wishes to access is classified as accessible for said category in which the user has been classified, where in order to classify a web page as accessible depending on the user's age, an analysis of the semantic content of said web page is performed by a semantic analyzer located in the network element (102).

7. Method according to any of the preceding claims which further comprises:
d) if the authentication is negative, sending a layer 2 message to the device indicating that access is denied to said user.

8. Method according to any of the preceding claims, where if the authentication is negative, the identification of the user is stored in the internal database as an unauthorized user.

9. Method according to any of the preceding claims, where step a) includes:
a1) receiving from the electronic device (100) a layer 2 message including a network access request and an identifier of the device (100);
a2) sending to the device a layer 2 message requesting an identifier of the user (101) and a password for said user (101);
a3) receiving from the device a layer 2 message including an identifier of the user (101) and the password for said user (101).

10. Method according to any of the preceding claims, where to register the user in the network, the network element (102) requests user information from the user and if the user does not provide said information, the network element (102) denies registration in the network; where this user information includes at least one of the following parameters: full name of the user, mailing address, ID number, passport number, date of birth.

11. Method according to any of the preceding claims, where the internal database (103) includes for each registered user at least one of the following parameters: full name of the user, mailing address, ID number, passport number, date of birth, and where the network element (102) sends said information concerning each user that is in the database, to a worldwide database, external to the network element.

12. Method according to any of the preceding claims, where the identifier of the device is at least one of the following: the MAC address of the device, the IMEI, IMSI, MSISDN or any other parameter identifying the device and where the network element (102) is a router.

13. Method according to any of the preceding claims which further comprises:
e) verifying if each user's (101) communication in progress is within the allowed times of access for said user (101) and/or for said device (100), stored in the database (103);
f) if that is not the case for any of the user's (101) communications in progress, cutting off said communication.

14. Network element (102) for the authentication of a user (101) of an electronic device (100) in a communications network, where the network element (102) comprises:
- a database comprising:
- a table of identifiers of registered users including the password linked to each user (104) and a table of identifiers of devices which are linked to each registered user (110);
- means for receiving from the device (100) a network access request, an identifier of the device (100), an identifier of the user (101) and a password for said user (103) by means of one or more OSI model layer 2 messages;
- a processor configured for authenticating the user, performing at least the following verifications:
- verifying that the identifier of the user is in the table of registered users (104) and that the received password corresponds to the one linked to said user in said table;
- verifying that the identifier of the device is in the corresponding table (110) of the database as linked to said user;
- if any of the verifications of the authentication is negative, denying said user's network access (101).

15. Digital storage medium for storing a computer program comprising computer executable instructions causing a computer executing the program to implement the method according to any of claims 1-13.
